# FASCICULE DE BREVET EUROPEEN

(11) **EP 3 910 223 B1**
(45) Date de publication et mention de la délivrance du brevet: **11.01.2023**
(21) Numéro de dépôt: 21172613.8
(22) Date de dépôt: 06.05.2021
(51) Int. Cl.: F16L 23/00, F16L 23/08

(54) **SYSTEME DE SERRAGE COMPRENANT UN COLLIER ET UNE AGRAFE DE PRE-MONTAGE**
KLEMMSYSTEM, DAS EINE SCHLAUCHKLEMME UND EINE VORMONTAGEKLAMMER UMFASST
CLAMPING SYSTEM COMPRISING A COLLAR AND A PRE-ASSEMBLY CLIP

(30) Priorité: 13.05.2020 FR 2004716
(43) Date de publication de la demande: 17.11.2021
(73) Titulaire: Caillau, 92130 Issy-les-Moulineaux (FR)
(72) Inventeur: PREVOT, Fabrice, 41130 SELLES SUR CHER (FR)
(74) Mandataire: Cabinet Beau de Loménie

(56) Documents cités:
- EP-A1- 1 451 498
- EP-A1- 2 598 785
- US-A1- 2014 217 728
- US-A1- 2018 156 368

## Description

### Arrière-plan de l'invention

Le présent exposé concerne un système de serrage pour le raccordement d'un premier et un deuxième tube dont les extrémités en regard présentent des surfaces de serrage en saillie par rapport à la surface extérieure cylindrique desdits tubes.

Un système de serrage de ce type est connu, par exemple par les brevets européens EP 1 451 498 et EP 2 598 785.

Dans un tel système, le collier comprend une ceinture apte à être serrée autour des surfaces de serrage des tubes. La ceinture présente des flancs entre lesquels est délimité un renfoncement interne dans lequel sont disposées les surfaces de serrage des tubes pour réaliser le serrage. Les tubes sont ainsi retenus serrés l'un par rapport à l'autre. Comme indiqué dans les brevets précités, il peut être utile de pré-monter le système de serrage sur l'extrémité d'au moins l'un des tubes avant d'opérer le serrage.

EP 1 451 498 propose un système permettant un pré-montage par rapport à un tube, à l'aide de pattes de pré-montage portées par la ceinture via une rondelle elle-même portée par la ceinture. Ce système donne satisfaction mais, par définition, il impose la présence d'une rondelle dont la forme peut être relativement complexe, ce qui impacte les coûts de production et de montage.

Afin de permettre un pré-montage sur les deux tubes, EP 2 598 785 utilise également une rondelle, portée par le collier et comprenant des premières et des deuxièmes pattes de pré-montage aptes à respectivement coopérer avec le premier et avec le deuxième tube pour retenir la rondelle, et donc l'ensemble du système de serrage, par rapport aux surfaces de serrage respectives des tubes avant le serrage. Ce système donne également satisfaction mais il nécessite également la présence d'une rondelle de forme relativement complexe. Cette forme est rendue plus complexe par la nécessité de réaliser deux types de pattes, s'étendant de part et d'autre de la rondelle pour s'accrocher respectivement sur chacun des deux tubes. En particulier, la conception et le dimensionnement des pattes réalisant l'accrochage sur le tube le plus éloigné de la rondelle en situation pré-montée, peuvent être délicats pour que ces pattes aient à la fois la résistance mécanique nécessaire à la bonne retenue sur ce tube et la souplesse à leur fléchissement élastique lors de l'insertion de ce tube dans le collier.

On connait en outre d'autres systèmes de serrage comprenant un collier et une rondelle portée par le collier, la rondelle présentant des pattes internes, aptes à s'agripper à l'intérieur de l'un des tubes, pour pré-monter le système de serrage à l'extrémité de ce tube. Il peut être utile de compléter ce système pour permettre également un pré-montage par rapport à l'autre tube. On peut pour cela utiliser les pattes longues proposées par EP 2 598 785 mais, en particulier pour des colliers de grands diamètres, il existe un besoin pour une autre solution, sensiblement exempte des inconvénients précités.

US20140217728 divulgue un système de serrage qui comprend un collier et une attache de pré-positionnement comprenant une portion de ceinture apte à ceinturer un tube, l'attache étant fixée au collier par des pattes.

### Objet et résumé de l'invention

De manière générale, il existe un besoin pour un système de serrage pour le raccordement de deux tubes, comprenant un collier pouvant aisément être retenu en situation pré-montée à l'extrémité de l'un des tubes, ceci indépendamment du fait que le système de serrage comprenne ou non une rondelle de serrage portée dans le collier.

Ainsi, le présent exposé concerne un système de serrage pour le raccordement d'un premier et un deuxième tube dont les extrémités en regard présentent des surfaces de serrage en saillie par rapport à la surface extérieure cylindrique desdits tubes, le système comprenant un collier qui comprend une ceinture apte à être serrée autour desdites surfaces de serrage, la ceinture présentant un premier et un deuxième flanc, qui s'étendent de part et d'autre d'un plan radial médian perpendiculaire à l'axe de la ceinture et entre lesquels est délimité un renfoncement interne apte à recevoir les surfaces de serrage, le collier portant une agrafe externe de retenue qui comprend :
- un segment de retenue et un segment de retenue supplémentaire angulairement espacés l'un de l'autre et situés du côté du premier flanc,
- un premier et un deuxième organe de retenue qui sont situés du côté du deuxième flanc et sont reliés au segment de retenue, et
- un premier et un deuxième organe de retenue supplémentaires qui sont situés du côté du deuxième flanc et sont reliés au segment de retenue supplémentaire,
de sorte que le collier est retenu axialement entre, d'une part, le segment de retenue et le segment de retenue supplémentaire et, d'autre part les premier et deuxième organes de retenue et les premier et deuxième organes de retenue supplémentaires, le segment de retenue et le segment de retenue supplémentaire étant aptes, à partir d'une situation de repos dans laquelle ils dépassent vers l'axe de la ceinture par rapport au bord du premier flanc en situation non serrée de la ceinture, à être déformés élastiquement pour être éloignés par rapport à l'axe de la ceinture.

Ainsi, la retenue du système de serrage par rapport à la surface de serrage du premier tube est particulièrement aisée à mettre en œuvre. Cette retenue fait appel à une simple agrafe externe, dont le bon positionnement peut aisément être contrôlé. De plus, cette agrafe est compatible avec la présence d'une rondelle interne au collier, de sorte que le système peut comprendre une telle rondelle ou au contraire ne pas en avoir. D'ailleurs, si le système comporte une rondelle, on peut parfaitement prévoir que l'agrafe serve à la retenue de pré-montage sur l'un des tubes et que la rondelle soit configurée pour servir à la retenue de pré-montage sur l'autre tube, par exemple en étant du type de la rondelle de EP 1 451 498.

L'agrafe est facile à monter sur le collier grâce à la déformation élastique du segment de retenue et du segment de retenue supplémentaire. Lors de l'emmanchement du premier tube à l'intérieur du système de serrage, le segment de retenue et le segment de retenue supplémentaires se défléchissent vers l'extérieur pour permettre l'insertion de la surface de serrage du premier tube dans le collier, avant de revenir naturellement vers leurs positions de repos, dans laquelle ils interfèrent avec le bord du premier flanc tout en coopérant avec la surface de serrage du premier tube pour s'opposer à ce que la surface de serrage du premier tube ne ressorte du collier de manière intempestive.

Optionnellement, le premier et le deuxième organe de retenue sont reliés au segment de retenue par, respectivement, un premier et un deuxième retour de liaison.

Optionnellement, le premier et le deuxième organe de retenue supplémentaires sont reliés au segment de retenue supplémentaire par, respectivement, un premier et un deuxième retour de liaison supplémentaires.

Optionnellement, vus depuis le côté du premier flanc, les premier et deuxième organes de retenue sont accrochés sur une zone du collier qui est située de l'autre côté du plan radial médian par rapport au premier flanc.

Optionnellement, vu depuis le côté du premier flanc, au moins l'un des premier et deuxième organe de retenue est accroché sur le deuxième flanc.

Optionnellement, le collier présente au moins une oreille en saillie radiale par rapport à la circonférence de la ceinture, en particulier une oreille servant au serrage de la ceinture, et, vu depuis le côté du premier flanc, au moins l'un des premier et deuxième organe de retenue est accroché sur ladite oreille.

Optionnellement, au moins l'un des premier et deuxième organes de retenue forme une partie d'une boucle.

Optionnellement, au moins l'un des premier et deuxième retours de liaison suit la forme extérieure des flancs.

Optionnellement, le segment de retenue et le segment de retenue supplémentaire sont diamétralement opposés.

Optionnellement, le deuxième organe de retenue et le deuxième organe de retenue supplémentaire sont reliés par un segment de liaison situé du côté du deuxième flanc.

Optionnellement, le segment de liaison comprend une partie formant levier de manipulation, axialement écartée du deuxième flanc. Optionnellement, l'agrafe externe de retenue est symétrique par rapport à un plan diamétral de la ceinture.

Optionnellement, l'agrafe externe de retenue est formée en matériau filaire, en particulier du fil métallique.

Optionnellement, le segment de retenue présente à l'état libre une forme rectiligne, parallèle à un diamètre de la ceinture et, optionnellement, le segment de retenue supplémentaire présente à l'état libre une forme rectiligne, parallèle à un diamètre de la ceinture.

Optionnellement, l'agrafe externe de retenue comprend un segment de retenue opposé, situé du côté du deuxième flanc et apte, à partir d'une situation de repos dans laquelle il dépasse vers l'axe de la ceinture par rapport au bord du deuxième flanc en situation non serrée de la ceinture, à être déformé élastiquement pour éloigner le segment de retenue opposé par rapport à l'axe de la ceinture.

Optionnellement, au moins l'un des premier et deuxième organes de retenue présente un prolongement dans lequel est formé le segment de retenue opposé.

Le présent exposé sera bien compris et ses avantages apparaîtront mieux à la lecture de la description détaillée qui suit, d'un mode de réalisation représenté à titre d'exemple non limitatif.

### Brève description des dessins.

[Fig. 1] représente en perspective un système de serrage conforme à l'invention, en situation pré-montée sur les extrémités de tubes qu'il sert à raccorder entre eux, vu du côté de l'un des tubes.
[Fig. 2] La figure 2 est une vue analogue à celle de la figure 1, en vue du côté de l'autre tube.
[Fig. 3] La figure 3 est une vue en perspective éclatée montrant les différents éléments constitutifs du système de serrage, ainsi que les extrémités des tubes qu'il sert à raccorder entre eux.
[Fig. 4] La figure 4 montre l'agrafe du système de serrage vue en perspective.
[Fig. 5] La figure 5 montre l'agrafe du système de serrage selon une variante.
[Fig. 6] La figure 6 montre le système de serrage en vue de dessus, selon la flèche VI de la figure 1.

### Description détaillée de l'invention

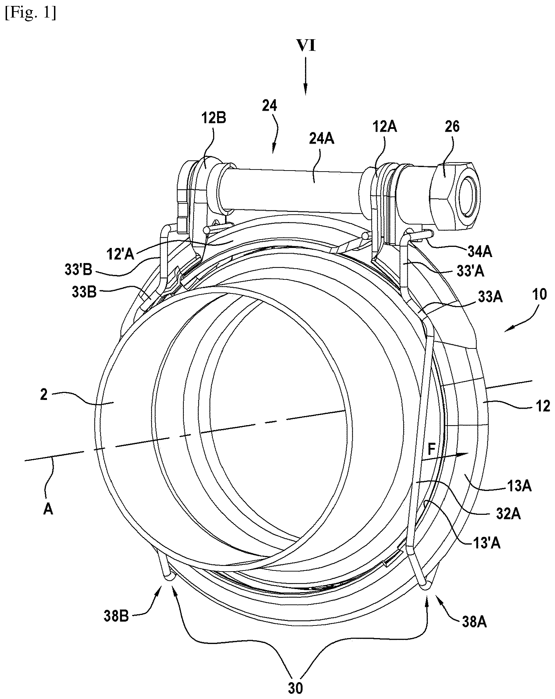

On décrit tout d'abord les figures 1 à 3. On voit que le système de serrage selon le présent exposé comprend un collier 10 du même type que celui décrit dans EP 1 451 498, qui sert à raccorder entre eux un premier et un deuxième tubes 2, 4.

Dans toute la suite, on qualifiera de "radialement internes" les éléments qui sont dirigés vers l'axe A de la ceinture 12 du collier, par opposition à d'autres éléments qualifiés de "radialement externes", les éléments "radialement externes" étant ceux qui sont dirigés à l'opposé de l'axe A. On considère par ailleurs que l'axe A de la ceinture est également l'axe des tubes 2, 4 lorsqu'ils sont assemblés.

Par ailleurs, on considérera qu'un deuxième élément est "externe" ou "axialement externe" à un premier élément, si le deuxième élément se situe à côté du premier, en dehors de la tranche axiale qu'occupe le premier élément.

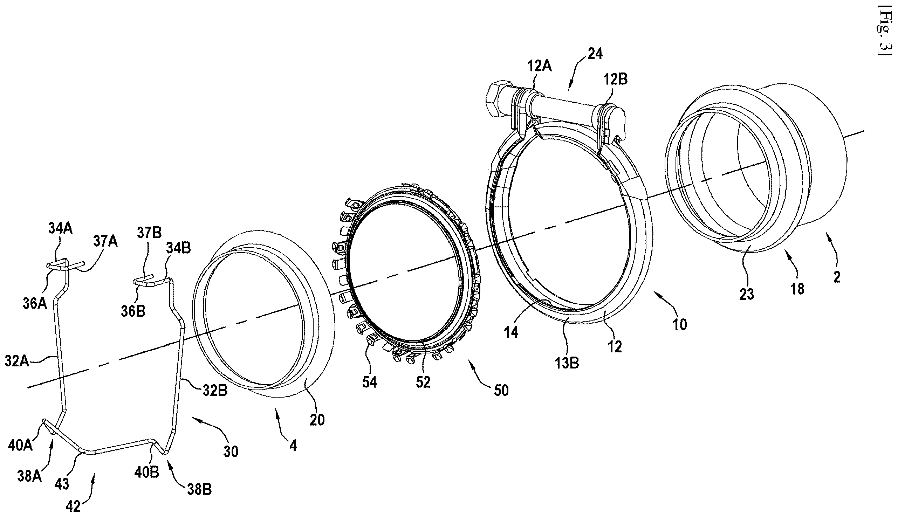

Comme on le voit mieux sur la figure 3, la ceinture 12 du collier, c'est-à-dire la partie de ce collier qui est enroulée autour de l'axe A, délimite un renfoncement 14 dans lequel les surfaces de serrage, respectivement 18 appartenant au premier tube 2 et 20 appartenant au deuxième tube 4, peuvent être insérées. Ce renfoncement et ces surfaces de serrage ont des formes telles que le serrage de la ceinture du collier contraint les extrémités des tubes 2 et 4 à se rapprocher l'une de l'autre. Le renfoncement 14 est délimité entre un premier et un deuxième flanc 13A et 13B de la ceinture 12, ces flancs définissant l'espèce des branches d'un V vu en section axiale. Ainsi, la ceinture 12 présente une section axiale avantageusement en forme en V, dont la pointe est dirigée vers l'extérieur, tandis que les surfaces de serrage 18 et 20 présentent un diamètre qui augmente progressivement vers les extrémités libres en regard des tubes et sont par exemple de forme tronconique. Cependant, la ceinture pourrait avoir une section qui se rapprocherait davantage d'un U, par exemple.

La ceinture 12 présente des extrémités, respectivement 12A et 12B, qui sont redressées sensiblement radialement de manière à former des pattes d'appui. Ces pattes sont percées de manière à permettre le passage de la tige 24A d'une vis de serrage 24 à travers ces pattes. La tête 24B de la vis est calée par rapport à l'une des pattes d'appui, en l'espèce la patte 12B, tandis qu'un écrou 26 est retenu par rapport à l'autre patte d'appui 12A. On comprend que la rotation de l'écrou dans le sens du vissage rapproche les pattes d'appui l'une de l'autre et réduit donc le diamètre intérieur du collier, c'est-à-dire qu'elle permet de serrer la ceinture du collier. Bien entendu, d'autres façons de serrer la ceinture sont envisageables, par exemple un système à accrochage, comme décrit notamment dans la demande de brevet FR 3 008 160. En l'espèce, la ceinture 12 présente un prolongement formant une bavette 12'A qui s'étend entre les pattes d'appui 12A et 12B. On comprend que, en situation serrée de la ceinture, cette bavette évite une discontinuité d'appui de la ceinture sur les surfaces de serrage des tubes.

En l'espèce, l'extrémité du tube 4 est un évasé femelle, la périphérie interne de sa surface de serrage 20 formant un évasé. En revanche, l'extrémité libre du premier tube 2 est une extrémité mâle qui, au-delà de la surface de serrage 18, présente une périphérie extérieure 23 dont le diamètre va en diminuant vers la terminaison de l'extrémité libre. La partie d'extrémité 23 ainsi formée peut donc s'insérer, sensiblement avec complémentarité de forme, à l'intérieur de l'évasé formé à l'extrémité du tube 4.

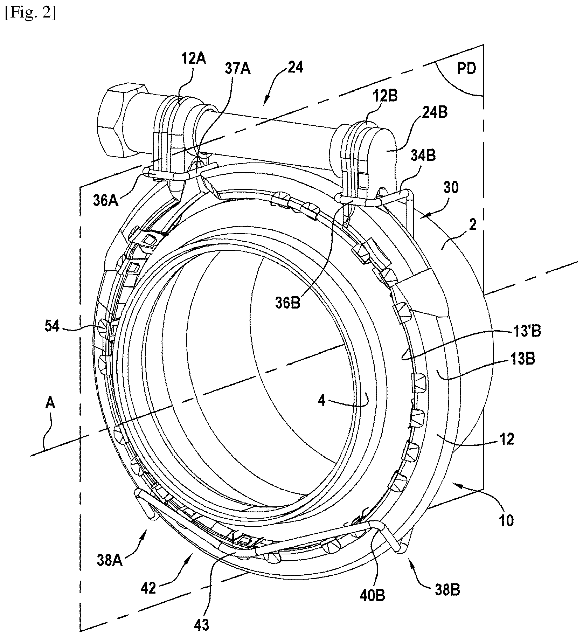

Le système de serrage comprend une agrafe 30 qui, comme on le voit en particulier sur les figures 1 et 2, est disposé à l'extérieur du collier et sert à la retenue en situation pré-montée du tube 2 par rapport au système de serrage. Comme on le voit en particulier sur la figure 1, cette agrafe externe de retenue 30 comprend un segment de retenue 32A qui est situé du côté du premier flanc 13A de la ceinture. Elle comprend également un premier retour de liaison 34 qui relie le segment de retenue 32A à un premier organe de retenue 36A situé du côté du deuxième flanc 13B, et un deuxième retour de liaison 38A qui relie le segment de retenue 32A à un deuxième organe de retenue 40A, également situé du côté du deuxième flanc 13B. On comprend, notamment en comparant les figures 1 et 2, que le collier 10 est retenu axialement entre, d'une part, le segment de retenue 32A et, d'autre part, les premier et deuxième organes de retenue 36A et 40A. Ces premier et deuxième organes de retenue sont espacés l'un de l'autre selon la périphérie de la ceinture, de sorte qu'ils retiennent la ceinture, du côté du deuxième flanc 13B, en deux zones angulairement espacées.

Par ailleurs, on voit sur la figure 1 que le segment de retenue 32A dépasse vers l'intérieur par rapport au bord 13'A du premier flanc 13A. En effet, il est situé davantage vers l'axe A de la ceinture que ce bord, ce qui permet qu'il soit retenu derrière la surface de serrage 18 du premier tube 2 lorsque cette surface de serrage est insérée à l'intérieur du collier. Ici, le qualificatif « derrière » s'apprécie par opposition au sens d'engagement de la surface de serrage dans le collier, qui est alors le sens vers l'avant. En fait, pour permettre cette insertion, le segment de retenue 32A peut être élastiquement fléchi vers l'extérieur, comme indiqué par la flèche F. On comprend que dans sa position naturelle de repos, le segment de retenue est effectivement situé davantage vers l'axe A que le bord 13'A du flanc 13A de la ceinture.

En l'espèce, l'agrafe de retenue 30 présente également un segment de retenue supplémentaire 32B angulairement espacé du segment de retenue 32A et également situé du côté du premier flanc 13A de la ceinture. L'agrafe de retenue 30 comprend également un premier organe de retenue supplémentaire 36B situé du côté du deuxième flanc 13B et relié au segment de retenue supplémentaire 32B par un premier retour de liaison supplémentaire 34B, ainsi qu'un deuxième organe de retenue supplémentaire 40B, également situé du côté du deuxième flanc 13B, et relié au segment de retenue supplémentaire 32B par un deuxième retour de liaison supplémentaire 38B. Ces premier et deuxième organes de retenue supplémentaires sont espacés l'un de l'autre selon la périphérie de la ceinture.

Le segment de retenue supplémentaire 32B est angulairement espacé du segment de retenue 32A. Comme le segment de retenue 32A, le segment de retenue supplémentaire 32B dépasse vers l'axe du collier par rapport au bord 13'A du premier flanc 13A en situation non serrée de la ceinture et peut être déformé élastiquement pour s'éloigner de l'axe du collier et permettre l'insertion de la surface de serrage du premier tube. Ainsi, le segment de retenue 32A et le segment de retenue supplémentaire 32B retiennent la surface de serrage du premier tube 2 dans deux zones angulairement espacées de cette surface de serrage, et favorisent donc l'alignement de l'axe du tube avec celui de la ceinture et évitent des débattements angulaires respectives du premier tube et du collier en situation pré-montée.

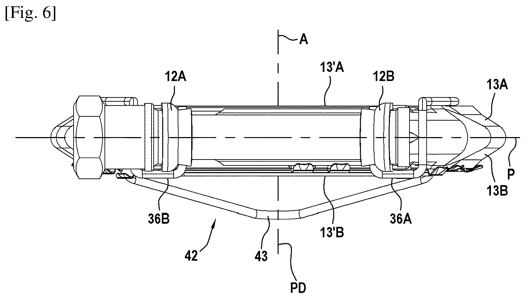

En fait, dans l'exemple représenté, le segment de retenue 32A et le segment de retenue supplémentaire 32B sont diamétralement opposés, c'est-à-dire que, lorsque l'agrafe est montée sur le collier, ils sont situés de part et d'autre qu'un plan diamétral PD (voir figures 2 et 6 : plan passant par l'axe A et perpendiculaire au plan de la figure 6) en étant à égale distance de ce plan PD. En l'espèce, l'agrafe de retenue 30 est symétrique par rapport à un tel plan diamétral. Il s'agit en particulier d'un plan diamétral défini par l'axe A et situé à égale distance des pattes d'appui 12A et 12B du collier.

Les deux segments de retenue étant en l'espèce analogues, on s'intéresse maintenant plus précisément à l'un d'entre eux, par exemple le segment de retenue 32A. On voit que ce segment de retenue est en l'espèce rectiligne, et forme une barre de retenue qui est orientée transversalement à l'axe A. Cependant, le segment de retenue pourrait avoir une forme différente, en particulier être naturellement incurvé dans le sens tendant à le rapprocher de l'axe A. Lorsque l'agrafe externe de retenue 30 est montée sur le collier, le segment de retenue 32A est donc situé à l'extérieur de la ceinture, contre le bord 13'A du premier flanc 13A de la ceinture. Les retours de liaison 34A et 38A relient le segment de retenue aux premier et deuxième organes de retenue 36A, 40A. En effet, ces premier et deuxième organes de retenue sont à l'inverse situés du côté du deuxième flanc 13B de la ceinture. Ainsi, les premier et deuxième organes de retenue s'étendent de l'autre côté du plan radial médian P (voir figure 6) de la ceinture par rapport au segment de retenue.

On pourrait prévoir que les premier et deuxième organes de retenue soient accrochés contre le bord 13'B du deuxième flanc 13B. Dans l'exemple représenté, c'est le cas pour le deuxième organe de retenue 40A dont on voit sur la figure 2 qu'il s'étend radialement vers l'intérieur au-delà du bord 13'B du deuxième flanc 13B.

Cependant, s'agissant du premier organe de retenue 36A, on met l'espèce à profit la présence des pattes d'appui 12A et 12B du collier. Ainsi, comme on le voit sur la figure 2, le premier organe de retenue 36A est accroché sur la patte d'appui 12A. De manière générale, la patte d'appui 12A forme une oreille en saillie radiale par rapport à la circonférence de la ceinture. En l'occurrence, il s'agit d'une patte d'appui au sens où elle coopère avec la vis de serrage pour serrer le collier. Il pourrait s'agir d'une oreille en saillie radiale servant au serrage, par exemple par accrochage avec un crochet, comme décrit dans l'un des modes de réalisation de la demande FR 3 008 160.

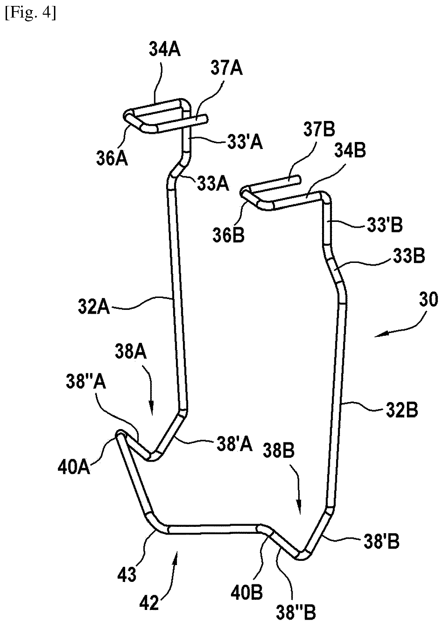

En l'occurrence, l'organe de retenue 36A forme une partie d'une boucle de l'agrafe, dans laquelle est passée la base de la patte d'appui 12A. En l'espèce, cette boucle est formée dans une zone d'extrémité de l'agrafe, l'organe de retenue 36A étant prolongé par une partie terminale 37A qui forme un bout libre de l'agrafe (voir figures 3 et 4). Le retour de liaison 34A, le premier organe de retenue 36A et la partie terminale 37A forment ensemble la boucle qui est passée autour de la base de la patte d'appuie 12A. En l'espèce, cette boucle présente une forme en U.

La conformation est similaire en ce qui concerne le segment de retenue supplémentaire 32B, et l'on voit que le retour de liaison supplémentaire 34B, le premier organe de retenue supplémentaire 36B et la portion terminale 37B forment ensemble une boucle qui est passée autour de la base de la patte d'appui 12B de la ceinture. En l'espèce, l'agrafe est de type ouvert entre le premier organe de retenue 36A et le premier organe de retenue supplémentaire 36B. En effet, comme indiqué, les portions terminales 37A et 37B se terminent par des extrémités libres dissociées. Dans la mesure où les boucles sont passées autour des pattes d'appui 12A et 12B, on comprend que le fait que l'agrafe soit dépourvue de segment de liaison entre ces deux boucles favorise sa capacité à accompagner le rapprochement des pattes d'appui lors du serrage du collier. On pourrait cependant parfaitement concevoir que l'agrafe soit de type fermé, avec par exemple un tronçon de liaison entre les parties terminales 37A et 37B, ce tronçon pouvant se déformer ou se rompre lors du serrage du collier. En l'espèce, le raccordement du segment de retenue 32A au retour de liaison 34A est réalisé par une portion intermédiaire 33A qui est orientée selon la circonférence du bord 13'A de la ceinture, ce tronçon intermédiaire étant lui-même relié à une portion redressée 33'A qui forme une entretoise radiale entre le tronçon intermédiaire 33A et le premier organe de retenue 34A. De même, le segment de retenue supplémentaire 32B est relié au premier organe de retenue supplémentaire 34B par une portion intermédiaire 33B et une portion redressée 33'B (voir figure 4).

En l'espèce, les portions redressées 33'A et 33'B s'étendent sensiblement dans un plan perpendiculaire à l'axe A et vont donc en s'écartant du flanc 13A de la ceinture à mesure qu'il s'éloigne de l'axe A.

Il est cependant parfaitement envisageable qu'au moins l'un des premier et deuxième retours de liaison suive au contraire la forme extérieure des flancs. C'est en l'espèce le cas du deuxième retour de liaison 38A. On voit en effet que celui-ci comporte deux branches, respectivement 38'A et 38"A qui forment deux branches d'un V épousant globalement la forme extérieure de la ceinture. Il en va de même pour le deuxième organe de retenue supplémentaire, avec deux branches 38'B, 38"B.

L'agrafe 30 est en l'espèce formée dans un matériau filaire, en particulier du fil métallique, qui est plié pour faire en sorte que l'agrafe présente des différentes zones qui viennent d'être évoquées.

Comme on l'a indiqué, l'agrafe 30 est en l'espèce une agrafe de type ouvert, les segments terminaux 37A et 37B comprenant chacun une extrémité libre. En revanche, en l'espèce, du côté du deuxième organe de retenue 40A et du deuxième organe de retenue supplémentaire 40B, l'agrafe 30 présente un segment de liaison 42. Ce segment de liaison s'étend donc de l'un à l'autre du deuxième organe de retenue 40A et du deuxième organe de retenue supplémentaire 40B. En l'espèce, ce segment de liaison présente une portion centrale 43 qui est éloignée du bord 13'B du deuxième flanc 13B du côté axialement extérieur de ce deuxième flanc. Globalement, le segment de liaison présente deux tronçons qui s'étendent respectivement entre le deuxième organe de retenue 40A et la portion 43, et entre le deuxième organe de retenue supplémentaire 40B et la portion 43 en allant en s'éloignant du deuxième flanc 13B à mesure qu'ils se rapprochent de la portion 43. Cette portion 43 du segment de liaison 42 forme un levier de manipulation, qui est axialement écarté de ce deuxième flanc et qui facilite ainsi le montage et le démontage de l'agrafe sur le collier.

L'agrafe de retenue 30 permet de pré-monter le collier de serrage à l'extrémité du premier tube 2. En l'espèce, le système de serrage peut également être retenu pré-monté à l'extrémité de l'autre tube 4. Dans le mode de réalisation représenté sur les figures 1 à 3, 6 et 7, ceci est réalisé grâce à une rondelle 50 que comporte le système de serrage. Cette rondelle peut par exemple être globalement du même type que décrit dans EP 1 451 498, en ce qu'elle présente une portion annulaire et des pattes grâce auxquelles elle est retenue par rapport au collier. Ainsi, la rondelle 50 présente une portion annulaire tronconique 52 qui peut s'insérer entre les extrémités en regard des tubes 2 et 4 lorsqu'ils sont engagés dans le système de serrage. En effet, la rondelle 50 est retenue par rapport à la ceinture, en l'espèce par rapport à son deuxième flanc 13B, par des pattes de fixation de telle sorte qu'un espace annulaire est ménagé entre le deuxième flanc et la rondelle. L'extrémité libre du deuxième tube 4 portant sa surface de serrage 20 s'insère dans cet espace annulaire à l'intérieur de l'évidement 14, tandis que l'extrémité libre du premier tube 2 portant sa surface de serrage 18 s'insère du côté opposé de l'espace annulaire par rapport à la rondelle, c'est-à-dire contre la face interne de la portion tronconique 52 de la rondelle 50. En l'espèce, comme indiqué, l'extrémité du tube 4 est un évasé femelle, la périphérie interne à sa surface de serrage 20 formant un évasé. En revanche, l'extrémité libre du premier tube 2 est une extrémité mâle qui, au-delà de sa surface de serrage 18, présente une périphérie extérieure 23 dont le diamètre va en diminuant vers la terminaison de l'extrémité libre. La partie de l'extrémité 23 ainsi formée peut donc s'insérer, sensiblement à complémentarité de formes, à l'intérieur de l'évasé formé à l'extrémité du tube 4. La portion tronconique 52 de la rondelle 50 peut présenter des déformations annulaires formant joint d'étanchéité entre la surface interne de l'évasé de l'extrémité du premier tube et la périphérie externe de la partie d'extrémité 23.

La fixation de la rondelle 50 au collier et/ou le pré-montage du système de serrage comprenant le collier et la rondelle sur le tube 4 peuvent être assuré de la même manière que dans EP 1 451 498, par des pattes de fixation ou des pattes de pré-montage 54 dont est équipée la rondelle. Ainsi qu'on le voit notamment sur la figure 3, ces pattes peuvent être de plusieurs types, certaines pouvant être conformées en crochets pour s'accrocher sur le bord 13'B du flanc 13B, d'autres pouvant être formées par les languettes d'entretoisement destinées à coopérer avec la périphérie interne du flanc 13B. Certaines de ces pattes présentent également des surfaces d'agrippement par exemple formées par des languettes repliées vers l'intérieur pour venir s'agripper sur la surface de serrage 20A du tube 4 lorsqu'elles celles-ci est engagées dans le collier. On peut cependant utiliser d'autres modes de fixation de la rondelle au collier. Par exemple, la rondelle peut présenter une boucle de retenue dans laquelle peut être engagé le fût de la vis 24, ainsi qu'une ou plusieurs pattes de retenue pouvant être retenues sur le bord de la ceinture, par exemple par accrochage ou par pincement. De même, on peut utiliser d'autres modes de pré-montage du système de serrage par rapport au tube 4, par exemple en équipant la rondelle de pattes internes ou de crampons venant s'engager dans le tube 4 pour se cramponner contre la surface interne du tube 4.

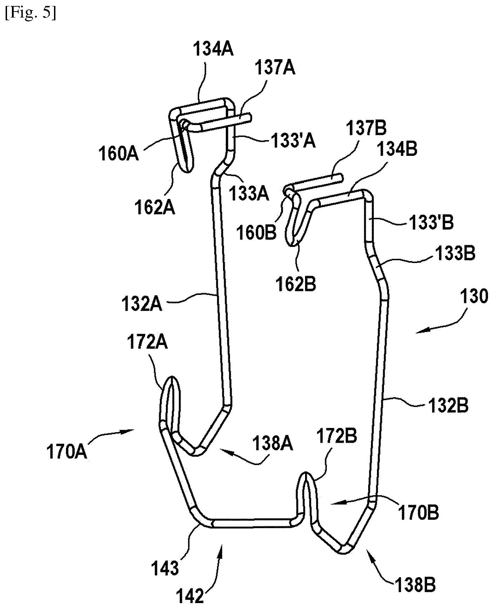

La figure 5 montre une variante 130 pour l'agrafe externe de retenue, qui permet que cette agrafe puisse à la fois assurer le pré-montage par rapport à chacun des deux tubes. Cette agrafe 130 présente de fortes similarités avec l'agrafe 30 qui vient d'être décrite. Les éléments de l'agrafe 130 qui sont communs à l'agrafe 3 sont désignés sur la figure 5 par les mêmes références augmentés de 100. La différence entre l'agrafe 30 et l'agrafe 130 est que cette dernière présente, en plus, un segment de retenue opposé situé du côté du deuxième flanc 13B de la ceinture pour coopérer avec la surface de serrage du deuxième tube 4. En l'espèce, ce segment de retenue opposée est formé dans un prolongement de l'un des premier et deuxième organes de retenue.

En l'espèce, l'agrafe 130 présente un tel segment de retenue opposé formé dans un prolongement de chacun des organes de retenue. Ainsi, le premier organe de retenue 160A présente un prolongement formant une déformation 162A qui s'étend radialement vers l'intérieur et forme un segment de retenue opposé. En l'espèce, ce prolongement est formé par une boucle en U dont la base est située radialement vers l'intérieur. De même, le deuxième organe de retenue 170A présente également un prolongement 172A qui s'étend radialement vers l'intérieur et forme également un segment de retenue opposée, en présentant en l'espèce la forme d'une boucle. En l'occurrence, l'agrafe 130 comprend également des premier et deuxième organes de retenue supplémentaires respectivement 160B et 170B qui présentent également des prolongements analogues respectivement 162B et 172B. Les boucles dans lesquelles sont formés les segments de retenue opposés 162A et 172A, et les segments opposés supplémentaires 162B, 172B, sont conformées de telle sorte qu'elles puissent être fléchies lors de l'insertion de l'extrémité du tube 4 dans le collier pour s'écarter afin de permettre cette insertion et revenir élastiquement en position pour retenir l'extrémité du tube 4 à l'intérieur du collier en situation de pré-montage.

L'agrafe externe de retenue est retenue par rapport au collier de manière stable, par les deux côtés axialement opposés du collier. Elle peut être montée sur le collier et être démontée, et le système peut ne pas comporter de moyens de fixation additionnels, en particulier une fixation permanente telle qu'une soudure ou analogue. En effet, une fois montée sur le collier, l'agrafe de retenue lui reste attachée de manière fiable. Il s'agit d'une pièce aisée à fabriquer pour un coût modique, qui peut être associée ou non au collier, ce qui permet une large gamme d'offres.

## Revendications

1. Système de serrage pour le raccordement d'un premier et un deuxième tube (2, 4) dont les extrémités en regard présentent des surfaces de serrage (18, 20) en saillie par rapport à la surface extérieure cylindrique desdits tubes, le système comprenant un collier (10) qui comprend une ceinture (12) apte à être serrée autour desdites surfaces de serrage, la ceinture (12) présentant un premier et un deuxième flanc (13A, 13B), qui s'étendent de part et d'autre d'un plan radial médian (P) perpendiculaire à l'axe de la ceinture et entre lesquels est délimité un renfoncement interne (14) apte à recevoir les surfaces de serrage (18, 20), le collier portant une agrafe externe de retenue (30 ; 130), **caractérisé en ce que** l'agrafe externe de retenue (30 ;130) comprend :
- un segment de retenue (32A ; 132A) et un segment de retenue supplémentaire (32B ; 132B), angulairement espacés l'un de l'autre et situés du côté du premier flanc,
- un premier et un deuxième organe de retenue (36A, 40A ; 160A, 170A), qui sont situés du côté du deuxième flanc (13B) et sont reliés au segment de retenue, et
- un premier et un deuxième organe de retenue supplémentaires (36B, 40B ; 160B, 170B), qui sont situés du côté du deuxième flanc (13B) et sont reliés au segment de retenue supplémentaire,
de sorte que le collier est retenu axialement entre, d'une part, le segment de retenue et le segment de retenue supplémentaire et, d'autre part les premier et deuxième organes de retenue et les premier et deuxième organes de retenue supplémentaires, le segment de retenue et le segment de retenue supplémentaire étant aptes, à partir d'une situation de repos dans laquelle ils dépassent vers l'axe (A) de la ceinture par rapport au bord (13'A) du premier flanc (13A) en situation non serrée de la ceinture (12), à être déformés élastiquement pour éloigner le segment de retenue et éloigner le segment de retenue supplémentaire par rapport à l'axe de la ceinture.

2. Système de serrage selon la revendication 1, dans lequel, vus depuis le côté du premier flanc (13A), les premier et deuxième organes de retenue (36A, 40A ; 160A, 170A) sont accrochés sur une zone du collier (10) qui est située de l'autre côté du plan radial médian (P) par rapport au premier flanc.

3. Système de serrage selon la revendication 2, dans lequel, vu depuis le côté du premier flanc (13A), au moins l'un (40A ; 170A) des premier et deuxième organes de retenue est accroché sur le deuxième flanc (13B).

4. Système de serrage selon l'une des revendications 2 et 3, dans lequel le collier (10) présente au moins une oreille (12B) en saillie radiale par rapport à la circonférence de la ceinture (12), en particulier une oreille servant au serrage de la ceinture, et dans lequel, vu depuis le côté du premier flanc (13A), au moins l'un (36A ; 170A) des premier et deuxième organe de retenue est accroché sur ladite oreille.

5. Système de serrage selon l'une des revendications 1 à 4, dans lequel au moins l'un (36A ; 160A) des premier et deuxième organes de retenue forme une partie d'une boucle (34A, 36A, 37A ; 134A, 160A, 137A).

6. Système de serrage selon l'une des revendications 1 à 5, dans lequel le segment de retenue (32A ; 132A) et le segment de retenue supplémentaire (32B ; 132B) sont diamétralement opposés.

7. Système de serrage selon l'une des revendications 1 à 6, dans lequel le deuxième organe de retenue (40A ; 170A) et le deuxième organe de retenue supplémentaire (40B ; 170B) sont reliés par un segment de liaison (42 ; 142) situé du côté du deuxième flanc (13B).

8. Système de serrage selon la revendication 7, dans lequel le segment de liaison (42 ; 142) comprend une partie (43 ; 143) formant levier de manipulation, axialement écartée du deuxième flanc (13B).

9. Système de serrage selon l'une des revendications 1 à 8, dans lequel l'agrafe externe de retenue (30 ; 130) est symétrique par rapport à un plan diamétral (PD) de la ceinture.

10. Système de serrage selon l'une des revendications 1 à 9, dans lequel l'agrafe externe de retenue (30 ; 130) est formée en matériau filaire, en particulier du fil métallique.

11. Système de serrage selon l'une des revendications 1 à 10, dans lequel le segment de retenue (32A ; 132A) présente à l'état libre une forme rectiligne, parallèle à un diamètre de la ceinture et, optionnellement, le segment de retenue supplémentaire (32B ; 132B) présente à l'état libre une forme rectiligne, parallèle à un diamètre de la ceinture.

12. Système de serrage selon l'une des revendications 1 à 11, dans lequel l'agrafe externe de retenue (130) comprend un segment de retenue opposé (162A, 172A), situé du côté du deuxième flanc (13B) et apte, à partir d'une situation de repos dans laquelle il dépasse vers l'axe (A) du collier par rapport au bord (13'B) du deuxième flanc (13B) en situation non serrée de la ceinture (12), à être déformé élastiquement pour éloigner le segment de retenue opposé par rapport à l'axe du collier.

13. Système de serrage selon la revendication 12, dans lequel au moins l'un des premier et deuxième organes de retenue (160A, 170A) présente un prolongement dans lequel est formé le segment de retenue opposé (162A, 172A).

14. Système de serrage selon l'une des revendications 1 à 13, dans lequel le premier et le deuxième organe de retenue (36A, 40A ; 160A, 170A) sont reliés au segment de retenue (32A ; 132A) par, respectivement, un premier et un deuxième retour de liaison (34A, 38A ; 134A, 138A) et, optionnellement, le premier et le deuxième organe de retenue supplémentaires (36B, 40B ; 160B, 170B) sont reliés au segment de retenue supplémentaire (32B ; 132B) par, respectivement, un premier et un deuxième retour de liaison supplémentaires (34B, 38B ; 134B, 138B).

15. Système de serrage selon la revendication 14, dans lequel au moins l'un (38A ; 138A) des premier et deuxième retours de liaison suit la forme extérieure des flancs (13A, 13B) et, optionnellement, au moins l'un (38B ; 138B) des premier et deuxième retours de liaison suit la forme extérieure des flancs (13A, 13B).

## Patentansprüche

1. Klemmsystem zum Verbinden eines ersten und eines zweiten Rohrs (2, 4), deren gegenüberliegende Enden Klemmflächen (18, 20) aufweisen, die gegenüber der zylindrischen Außenfläche der Rohre vorstehen, wobei das System eine Schelle (10) umfasst, welche einen Ring (12) aufweist, der geeignet ist, um die Klemmflächen festgezogen zu werden, wobei der Ring (12) eine erste und eine zweite Flanke (13A, 13B) aufweist, die sich auf beiden Seiten einer radialen Mittelebene (P) senkrecht zur Achse des Rings erstrecken und zwischen denen eine innere Vertiefung (14) begrenzt ist, die geeignet ist, die Klemmflächen (18, 20) aufzunehmen, wobei die Schelle eine äußere Halteklammer (30; 130) trägt,
**dadurch gekennzeichnet, dass** die äußere Halteklammer (30; 130) umfasst:
- ein Haltesegment (32A; 132A) und ein zusätzliches Haltesegment (32B; 132B), die winkelmäßig voneinander beabstandet und auf der Seite der ersten Flanke gelegen sind,
- ein erstes und ein zweites Halteorgan (36A, 40A; 160A, 170A), die sich auf der Seite der zweiten Flanke (13B) befinden und mit dem Haltesegment verbunden sind, und
- ein erstes und ein zweites zusätzliches Halteorgan (36B, 40B ; 160B, 170B), die sich auf der Seite der zweiten Flanke (13B) befinden und mit dem zusätzlichen Haltesegment verbunden sind, und
so dass die Schelle axial zwischen einerseits dem Haltesegment und dem zusätzlichen Haltesegment und andererseits dem ersten und dem zweiten Halteorgan und dem ersten und dem zweiten zusätzlichen Halteorgan, gehalten ist, wobei das Haltesegment und das zusätzliche Haltesegment geeignet sind, aus einer Ruheposition, in der sie in Bezug auf den Rand (13'A) der ersten Flanke (13A) in nicht festgezogener Position des Rings (12) in Richtung der Achse (A) der Schelle vorstehen, elastisch verformt zu werden, um das Haltesegment und das zusätzliche Haltesegment in Bezug auf die Achse der Schelle zu entfernen.

2. Klemmsystem nach Anspruch 1, bei dem, von der Seite der ersten Flanke (13A) aus gesehen, das erste und das zweite Halteorgan (36A, 40A; 160A, 170A) an einem Bereich der Schelle (10) eingehakt sind, der sich in Bezug auf die erste Flanke auf der anderen Seite der radialen Mittelebene (P) befindet.

3. Klemmsystem nach Anspruch 2, bei dem von der Seite der ersten Flanke (13A) aus gesehen, wenigstens eines (40A; 170A) der ersten und zweiten Halteorgane an der zweiten Flanke (13B) eingehakt ist.

4. Klemmsystem nach einem der Ansprüche 2 und 3, bei dem die Schelle (10) wenigstens eine bezüglich des Umfangs des Rings (12) radial vorstehende Öse (12B) aufweist, insbesondere eine dem Festziehen des Rings dienende Öse, und bei dem, von der Seite der ersten Flanke (13A) aus gesehen, wenigstens eines (36A; 170A) der ersten und zweiten Halteorgane an der Öse eingehakt ist.

5. Klemmsystem nach einem der Ansprüche 1 bis 4, bei dem wenigstens eines (36A; 160A) der ersten und zweiten Halteorgane einen Teil einer Schlaufe (34A, 36A, 37A; 134A, 160A, 137A) bildet.

6. Klemmsystem nach einem der Ansprüche 1 bis 5, bei dem das Haltesegment (32A; 132A) und das zusätzliche Haltesegment (32B; 132B) einander diametral gegenüberliegen.

7. Klemmsystem nach einem der Ansprüche 1 bis 6, bei dem das zweite Halteorgan (40A; 170A) und das zweite zusätzliche Halteorgan (40B; 170B) durch eine auf der Seite der zweiten Flanke (13B) befindliches Verbindungssegment (42; 142) verbunden sind.

8. Klemmsystem nach Anspruch 7, bei dem das Verbindungssegment (42; 142) einen einen Betätigungshebel bildenden Teil (43; 143) aufweist, der von der zweiten Flanke (13B) axial entfernt ist,

9. Klemmsystem nach einem der Ansprüche 1 bis 8, bei dem die äußere Halteklammer (30; 130) symmetrisch bezüglich einer diametralen Ebene (PD) des Rings ist.

10. Klemmsystem nach einem der Ansprüche 1 bis 9, bei dem die äußere Halteklammer (30; 130) aus Drahtmaterial, insbesondere aus Metalldraht, gebildet ist.

11. Klemmsystem nach einem der Ansprüche 1 bis 10, bei dem das Haltesegment (32A; 132A) in freiem Zustand eine geradlinige Form parallel zu einem Durchmesser des Rings aufweist und optional das zusätzliche Haltesegment (32B; 132B) in freiem Zustand eine geradlinige Form parallel zu einem Durchmesser des Rings aufweist.

12. Klemmsystem nach einem der Ansprüche 1 bis 11, bei dem die äußere Halteklammer (130) ein gegenüberliegendes Haltesegment (162A, 172A) umfasst, das sich auf der Seite der zweiten Flanke (13B) befindet und geeignet ist, aus einer Ruheposition, in der es in Bezug auf den Rand (13'B) der zweiten Flanke (13B) in nicht festgezogener Position des Rings (12) in Richtung der Achse (A) der Schelle vorsteht, elastisch verformt zu werden, um das gegenüberliegende Haltesegment in Bezug auf die Achse der Schelle zu entfernen.

13. Klemmsystem nach Anspruch 12, bei dem wenigstens eines der ersten und zweiten Halteorgane (160A, 170A) eine Verlängerung aufweist, in der das gegenüberliegende Haltesegment (162A, 172A) ausgebildet ist.

14. Klemmsystem nach einem der Ansprüche 1 bis 13 bei dem das erste und das zweite Halteorgan (36A, 40A; 160A, 170A) mit dem Haltesegment (32A; 132A) durch eine erste bzw. eine zweite Verbindungsrückführung (34A, 38A; 134A, 138A) verbunden sind und optional das erste und das zweite zusätzliche Halteorgan (36B, 40B; 160B, 170B) mit dem zusätzlichen Haltesegment (32B; 132B) durch eine erste bzw. eine zweite zusätzliche Verbindungsrückführung (34B, 38B; 134B, 138B) verbunden sind.

15. Klemmsystem nach Anspruch 14, bei dem wenigstens eine (38A; 138A) der ersten und zweiten Verbindungsrückführungen der Außenform der Flanken (13A, 13B) folgt und optional wenigstens eine (38B; 138B) der ersten und zweiten Verbindungsrückführungen der Außenform der Flanken (13A, 13B) folgt.

## Claims

1. A clamping system for connecting a first and a second tube (2, 4) whose facing ends have clamping surfaces (18, 20) protruding relative to the cylindrical external surface of said tubes, the system comprising a collar (10) which comprises a belt (12) able to be clamped around said clamping surfaces, the belt (12) having a first and a second flank (13A, 13B) which extend on either side of a median radial plane (P) perpendicular to the axis of the belt and between which an internal recess (14) able to receive the clamping surfaces (18, 20) is delimited, the collar carrying an outer retaining clip (30; 130) **characterized in that** the outer retaining clip (30; 130) comprises:
- a retaining segment (32A; 132A) and an additional retaining segment (32B; 132B) angularly spaced from each other and located on the side of the first flank,
- a first and a second retaining member (36A, 40A; 160A, 170A) which are located on the side of the second flank (13B) and linked to the retaining segment, and
- a first and a second additional retaining member (36B, 40B; 160B, 170B) which are located on the side of the second flank (13B) and linked to the additional retaining segment,
so that the collar is retained axially between, on the one hand, the retaining segment and the additional retaining segment and, on the other hand, the first and second retaining members and the first and second additional retaining members, the retaining segment and the additional retaining segment being able, from a rest situation in which they protrude towards the axis (A) of the belt relative to the edge (13'A) of the first flank (13A) in an unclamped situation of the belt (12), to be elastically deformed in order to move the retaining segment and the additional retaining segment away from the axis of the belt.

2. The clamping system according to claim 1, wherein, viewed from the side of the first flank (13A), the first and second retaining members (36A, 40A; 160A, 170A) are hooked on one area of the collar (10) which is located on the other side of the median radial plane (P) relative to the first flank.

3. The clamping system according to claim 2, wherein, viewed from the side of the first flank (13A), at least one (40A; 170A) of the first and second retaining members is hooked on the second flank (13B).

4. The clamping system according to any of claims 2 and 3, wherein the collar (10) has at least one lug (12B) protruding radially relative to the circumference of the belt (12), particularly a lug serving for the clamping of the belt and wherein, viewed from the side of the first flank (13A), at least one (36A; 170A) of the first and second retaining member is hooked on said lug.

5. The clamping system according to any of claims 1 to 4, wherein at least one (36A; 160A) of the first and second retaining members forms part of a loop (34A, 36A, 37A; 134A, 160A, 137A).

6. The clamping system according to any of claims 1 to 5, wherein the retaining segment (32A; 132A) and the additional retaining segment (32B; 132B) are diametrically opposite.

7. The clamping system according to any of claims 1 to 6, wherein the second retaining member (40A; 170A) and the second additional retaining member (40B; 170B) are linked by a link segment (42; 142) located on the side of the second flank (13B).

8. The clamping system according to claim 7, wherein the link segment (42; 142) comprises a portion (43; 143) forming a handling lever, axially spaced apart from the second flank (13B).

9. The clamping system according to any of claims 1 to 8, wherein the outer retaining clip (30; 130) is symmetrical relative to a diametral plane (PD) of the belt.

10. The clamping system according to any of claims 1 to 9, wherein the outer retaining clip (30; 130) is formed of wire material, particularly metal wire.

11. The clamping system according to any of claims 1 to 10, wherein the retaining segment (32A; 132A) has in the free state a rectilinear shape, parallel to a diameter of the belt and, optionally, the additional retaining segment (32B; 132B) has in the free state a rectilinear shape, parallel to a diameter of the belt.

12. The clamping system according to any of claims 1 to 11, wherein the outer retaining clip (130) comprises an opposite retaining segment (162A, 172A), located on the side of the second flank (13B) and able, from a rest situation in which it protrudes towards the axis (A) of the belt relative to the edge (13'B) of the second flank (13B) in an unclamped situation of the belt (12), to be elastically deformed in order to move the opposite retaining segment away from the axis of the belt.

13. The clamping system according to claim 12, wherein at least one of the first and second retaining members (160A, 170A) has an extension in which the opposite retaining segment (162A, 172A) is formed.

14. The clamping system according to any of claims 1 to 13, wherein the first and second retaining members (36A, 40A; 160A, 170A) are linked to the retaining segment (32A; 132A) by, respectively, a first and a second link return (34A, 38A; 134A, 138A) and, optionally, the first and second additional retaining members (36B, 40B; 160B, 170B) are linked to the additional retaining segment (32B; 132B) by, respectively, a first and a second additional link return (34B, 38B ; 134B, 138B).

15. The clamping system according to claim 14, wherein at least one (38A; 138A) of the first and second link returns follows the external shape of the flanks (13A, 13B) and, optionally, at least one (38B; 138B) of the first and second additional link returns follows the external shape of the flanks (13A, 13B).
